# FASCICULE DE BREVET EUROPEEN

(11) **EP 0 650 794 B1**
(45) Date de publication et mention de la délivrance du brevet: **08.12.1999**
(21) Numéro de dépôt: 94402339.9
(22) Date de dépôt: 18.10.1994
(51) Int. Cl.: B23D 37/20

(54) **Installation de brochage d'ouvertures de traversée d'une plaque et procédé de brochage**
Räumanlage für durchgehende Löcher einer Platte und Räumverfahren
Broaching installation for through-holes in a plate and broaching method

(30) Priorité: 29.10.1993 FR 9312917
(43) Date de publication de la demande: 03.05.1995
(73) Titulaire: FRAMATOME, 92400 Courbevoie (FR)
(72) Inventeur: Beraudier, Daniel, F-71460 Dracy le Fort (FR); Douheret, Jean-Yves, F-71210 Saint-Laurent d'Andenay (FR)
(74) Mandataire: Bouget, Lucien

(56) Documents cités:
- EP-A- 0 001 938
- FR-A- 532 866
- US-A- 1 507 288
- US-A- 4 212 573

## Description

L'invention concerne une installation et un procédé de brochage pour réaliser des ouvertures de traversée d'une plaque de forme profilée, Selon le préambule de la revendication 1 et comme connu par le document EP-A-0 001 938. En particulier, l'invention peut être utilisée pour réaliser des ouvertures de traversée dans une plaque-entretoise d'un générateur de vapeur d'un réacteur nucléaire à eau sous pression.

Les générateurs de vapeur des réacteurs nucléaires à eau sous pression comportent un faisceau de tubes pliés en U dont les branches droites doivent être maintenues dans des dispositions parallèles suivant toute la hauteur du faisceau.

Chacune des branches droites de chacun des tubes du faisceau est engagée dans un ensemble d'ouvertures alignées d'un ensemble de plaques-entretoises disposées dans des positions espacées l'une de l'autre, suivant la hauteur du faisceau. Les ouvertures traversant les plaques-entretoises constituent des réseaux réguliers, par exemple à mailles carrées ou triangulaires.

Les ouvertures de traversée doivent être d'une forme telle qu'elles permettent à la fois un maintien efficace d'un tube et le passage de l'eau d'alimentation du générateur de vapeur autour du tube, à travers la plaque-entretoise.

Les ouvertures traversant les plaques-entretoises peuvent présenter des formes complexes, par exemple une forme de trèfle.

Les faisceaux de générateur de vapeur de grande puissance comportent un grand nombre de tubes, par exemple de l'ordre de 5.000, de sorte que les plaques-entretoises comportent chacune un très grand nombre d'ouvertures de traversée séparées par des parties métalliques qui peuvent être d'épaisseur relativement mince.

Il est donc nécessaire de réaliser les ouvertures de traversée des plaques tubulaires en utilisant un procédé permettant à la fois d'obtenir une très bonne précision de forme et de dimension des ouvertures, qui soit rapide et qui puisse être réalisé facilement de manière automatisée.

Les ouvertures des plaques-entretoises sont généralement réalisées par brochage, c'est-à-dire par passage d'une broche profilée ayant une section transversale correspondant à la section de l'ouverture à travers chacun des avant-trous d'un réseau d'avant-trous cylindriques traversant la plaque.

Les broches qui sont déplacées dans leur direction axiale à travers les avant-trous comportent des arêtes de coupe permettant de réaliser l'usinage des ouvertures, généralement en un seul passage.

On connaît des installations de brochage qui comportent un support de maintien et de positionnement de la plaque en position de brochage et des moyens de déplacement de la plaque sur son support suivant au moins deux directions parallèles aux faces de la plaque en position de travail, de manière à venir placer successivement chacun des avant-trous dans l'axe d'une broche fixée à l'une de ses extrémités dans un dispositif de traction et à son autre extrémité dans un dispositif d'accompagnement, le dispositif de traction et le dispositif d'accompagnement étant situés de part et d'autre de la plaque à brocher.

Le dispositif de traction et le dispositif d'accompagnement comportent des moyens de guidage et de déplacement dans une direction axiale commune, perpendiculaire à la plaque.

Après chacune des opérations de brochage effectuées par déplacement des dispositifs de traction et d'accompagnement, il est nécessaire de séparer l'extrémité de la broche du dispositif d'accompagnement avant de dégager totalement la broche de la plaque par un déplacement complémentaire du dispositif de traction. On éloigne la plaque de la zone dans laquelle se déplacent le dispositif de traction et le dispositif d'accompagnement. On peut alors réengager et fixer la broche dans le dispositif d'accompagnement afin de la replacer dans une position initiale de brochage.

On replace ensuite la plaque dans une nouvelle position de brochage, généralement en utilisant des moyens de déplacement dans au moins deux directions parallèles aux faces de la plaque.

De manière à accroître la rapidité d'exécution de l'installation de brochage, on peut fixer simultanément plusieurs broches sur un ensemble constitué par un dispositif de traction et un dispositif d'accompagnement pour réaliser simultanément le brochage de plusieurs ouvertures.

Cependant, la capacité de production des installations de brochage est limitée par le fait qu'entre deux opérations de brochage, il est nécessaire de séparer la broche du dispositif d'accompagnement, de sortir la broche de la plaque, d'éloigner la plaque, de replacer le dispositif de traction et le dispositif d'accompagnement dans leur position initiale et de déplacer la plaque vers une nouvelle position de brochage .

Il en résulte que les opérations effectives de brochage de la plaque sont séparées par des intervalles de temps relativement longs au détriment de la capacité de production et du rendement de l'installation.

En particulier, le déplacement des dispositifs de traction et d'accompagnement pour les remettre en position initiale demande un temps qui est du même ordre que le temps nécessaire pour réaliser le brochage.

Pour augmenter la capacité de production des installations de brochage, on a proposé, dans le FR-A-2.407.780, d'utiliser deux lignes de brochage parallèles comportant chacune un dispositif de traction et un dispositif d'accompagnement qui effectuent simultanément le brochage de deux ouvertures ou de deux ensembles d'ouvertures de la plaque.

Les dispositifs de traction et d'accompagnement des deux lignes sont placés dans des dispositions inverses de part et d'autre de la plaque, de manière que les deux lignes fonctionnent en sens inverse, le brochage étant effectué simultanément, sur deux ensembles d'ouvertures, depuis l'un et l'autre côtés de la plaque. A l'issue d'une opération de brochage, les deux broches ou les deux ensembles de broches sont retournés et transférés d'un dispositif de traction à un dispositif d'accompagnement voisin.

Il est donc nécessaire d'utiliser un dispositif de manutention relativement complexe pour assurer le retournement et le transfert des broches.

Le but de l'invention est donc de proposer une installation de brochage d'ouvertures de traversée d'une plaque par passage d'une broche profilée, successivement à travers chacun des avant-trous d'un réseau d'avant-trous traversant la plaque, comportant un support de maintien de la plaque en position de brochage, des moyens de déplacement de la plaque suivant au moins deux directions parallèles à ses faces et de positionnement de cette plaque, des moyens de traction et des moyens d'accompagnement d'au moins une broche disposés de part et d'autre de la plaque en position de travail et constituant au moins deux ensembles de brochage alignés chacun suivant un axe perpendiculaire aux faces de la plaque à brocher en position de brochage sur son support, le dispositif de traction et le dispositif d'accompagnement de chaque ensemble de brochage ayant des axes de déplacement alignés suivant un axe de travail commun, cette installation permettant d'atteindre une très bonne capacité de production tout en ayant une structure et un fonctionnement simples et assurant une continuité de fonctionnement dans le cas où un ensemble de brochage se trouverait défaillant en cours d'utilisation de l'installation.

Dans ce but, les deux ensembles de brochage constituent deux lignes de brochage à action successive, les axes de travail des deux lignes de brochage sont séparés par une distance au moins égale à la dimension maximale de la plaque suivant une première direction de déplacement de cette plaque, les deux dispositifs de traction des lignes de brochage d'une part et les deux dispositifs d'accompagnement d'autre part sont disposés d'un même côté de la plaque à brocher en position de brochage sur son support et les moyens de déplacement de la plaque sur son support sont prévus pour déplacer la plaque entre une première position de brochage d'au moins une ouverture quelconque de la plaque, dans la première ligne de brochage et une seconde position de brochage d'au moins une ouverture quelconque dans la seconde ligne de brochage.

Afin de bien faire comprendre l'invention, on va maintenant décrire, à titre d'exemple non limitatif, en se référant aux figures jointes en annexe, un mode de réalisation d'une installation de brochage suivant l'invention.
La figure 1 est une vue de dessus d'une installation de brochage suivant l'invention.
La figure 2 est une vue de face de l'installation représentée sur la figure 1.
Les figures 3A et 3B sont des vues en coupe suivant 3A-3B de la figure 1 montrant un dispositif de traction et un dispositif d'accompagnement, respectivement.
La figure 4 est une vue en coupe d'une pince d'accrochage de l'extrémité d'une broche dans une tête d'un dispositif de traction ou d'accompagnement.
Les figures 5A, 5B et 5C sont des vues schématiques montrant différentes étapes fonctionnelles successives d'une opération de brochage sur une des lignes de brochage d'une installation suivant l'invention.
Les figures 6A, 6B et 6C sont des vues schématiques montrant différentes étapes successives d'une opération de remise en position initiale des broches sur la seconde ligne de l'installation, simultanément au brochage.

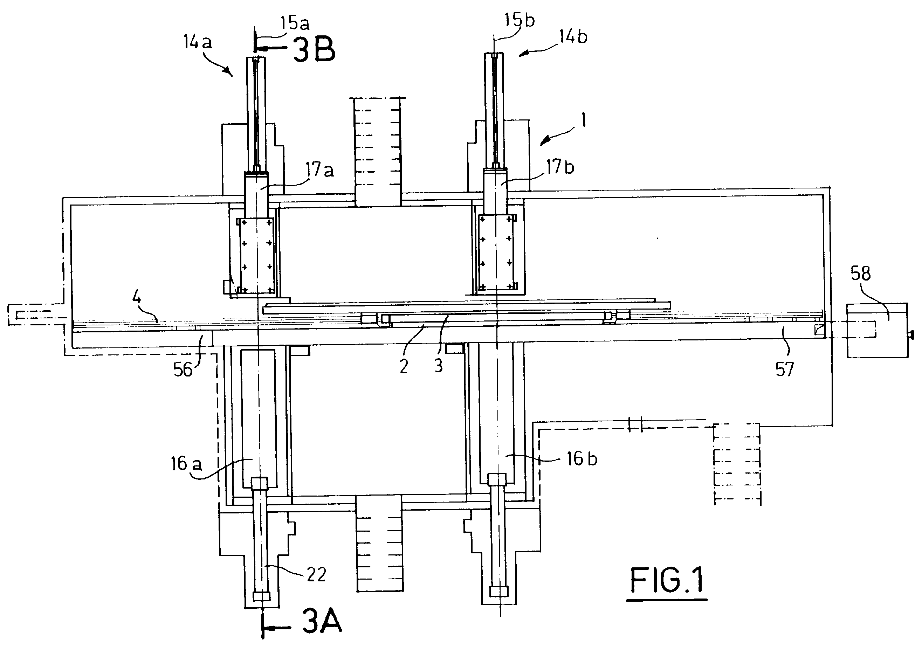

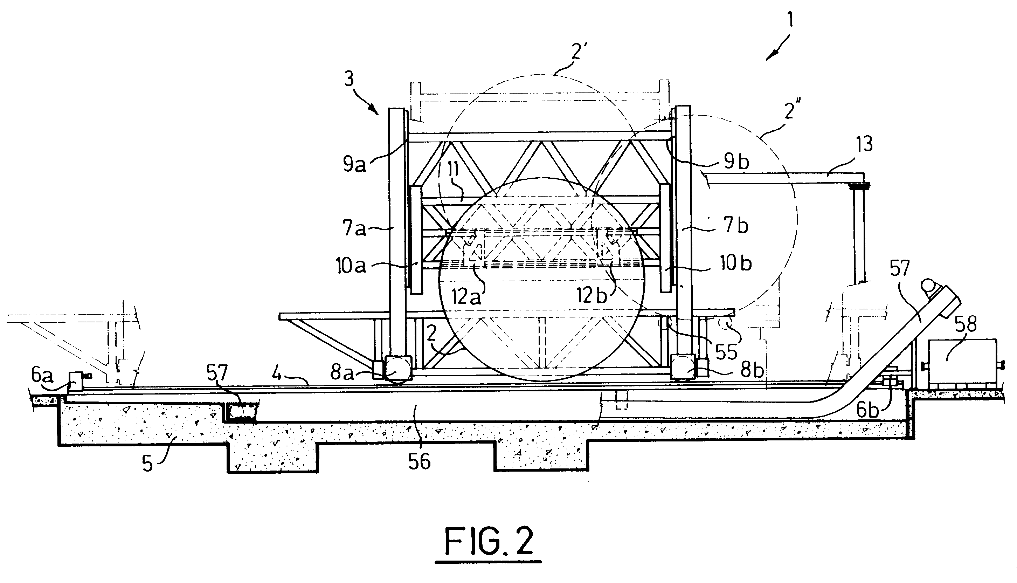

Sur les figures 1 et 2, on a représenté une installation de brochage suivant l'invention désignée de manière générale par le repère 1.

L'installation de brochage 1 permet de réaliser le brochage de plaques-entretoises 2 d'un générateur de vapeur d'un réacteur nucléaire à eau sous pression, de forme circulaire.

L'installation 1 peut être utilisée pour effectuer le brochage de plaques-entretoises ayant un diamètre compris entre une valeur minimale et une valeur maximale, par exemple entre un diamètre de 2000 mm et un diamètre de 4000 mm.

L'installation 1 comporte un support 3 de la plaque 2 dans une position verticale de travail, monté mobile sur un rail horizontal 4 fixé sur le sol 5 de l'atelier dans lequel est utilisée l'installation de brochage.

Des butées 6a et 6b disposées aux extrémités longitudinales du rail 4 permettent d'arrêter le support 3 dans deux positions extrêmes, lors de ses déplacements le long du rail 4.

Le support 3 est réalisé sous la forme d'un cadre rigide comportant des montants verticaux 7a et 7b, des traverses de liaison entre les montants et des éléments de raidissement placés dans des directions obliques par rapport aux montants et aux traverses.

Les montants 7a et 7b sont solidaires à leur partie inférieure de carters 8a et 8b dans lesquels des galets sont montés rotatifs. Les galets des carters 8a et 8b reposent sur le rail 4 et assurent le déplacement du support 3 dans la direction longitudinale du rail 4.

Le support 3 s'appuie en outre, par une partie supérieure munie de galets de roulement sur un second rail porté par un portique 13.

Les montants 7a et 7b comportent sur leur face interne, deux glissières verticales 9a et 9b entre lesquelles est monté, par l'intermédiaire de patins 10a et 10b, un chariot 11 comportant des longerons assurant la jonction entre les patins 10a et 10b.

Sur deux longerons du chariot 11, sont montés des supports de fixation 12a et 12b de la plaque 2.

La plaque 2 est une plaque plane circulaire en acier traversée par un réseau d'avant-trous circulaires sur toute son épaisseur.

La plaque 2 est fixée contre les supports 12a et 12b, par l'intermédiaire d'axes de fixation engagés chacun dans un avant-trou de la plaque 2 et dans une ouverture du support.

De plus, la plaque est maintenue contre les supports 12a et 12b dans une position verticale, sans possibilité de basculement vers l'avant par rapport au support 3, par l'intermédiaire de taquets engagés dans un avant-trou et dans une ouverture correspondante d'un support 12a ou 12b et comportant une tête d'appui sur la face antérieure de la plaque 2.

Le chariot 11 permet de déplacer la plaque 2, entre une position basse 2 représentée en traits pleins sur la figure 2 et une position haute 2' représentée en pointillés.

Une traverse inférieure du support 3 porte une crémaillère qui engrène avec un pignon fixé sur l'axe d'un motoréducteur en position fixe sur le sol 5 de l'atelier.

On peut ainsi déplacer dans la direction longitudinale du rail 4, le support 3 portant la plaque-entretoise 2, par l'intermédiaire du chariot 11.

Par l'intermédiaire des supports 3 et 11, on peut déplacer la plaque 2 dans deux directions parallèles à ses faces, l'une horizontale, l'autre verticale, pour assurer le positionnement des avant-trous de la plaque successivement, dans l'alignement des lignes de brochage, comme il sera expliqué plus loin.

Comme il est visible sur la figure 1, l'installation 1 comporte deux lignes de brochage 14a et 14b assurant le déplacement d'un groupe de broches, suivant un axe de brochage 15a ou 15b perpendiculaire au plan des faces de la plaque 2 en position de travail sur le support 3.

Les axes de brochage 15a et 15b des deux lignes de brochage 14a et 14b sont éloignés l'un de l'autre d'une distance supérieure au diamètre des plaques-entretoises de diamètre maximal dont on peut effectuer le brochage sur l'installation 1.

Dans le cas des plaques-entretoises de générateur de vapeur, comme indiqué plus haut, cette distance est supérieure à quatre mètres.

Chacune des lignes de brochage telles que 14a ou 14b comporte un dispositif de traction 16a (ou 16b) et un dispositif d'accompagnement 17a (ou 17b).

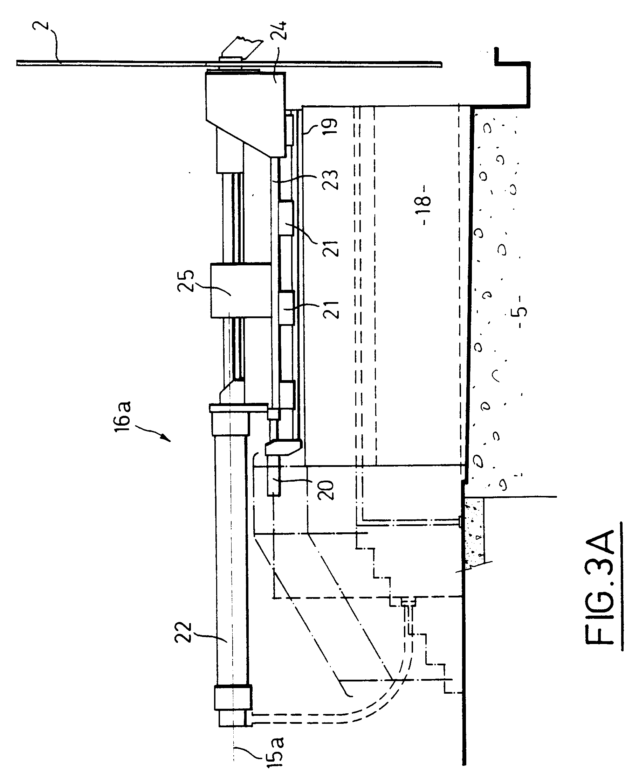

Comme il est visible sur la figure 3A, un dispositif de traction tel que 16a comporte un support 18 reposant sur le sol 5 de l'atelier dont la surface supérieure porte des glissières horizontales 19 et un vérin de manoeuvre ou vérin-étau 20 porté par des pattes de fixation.

Sur les glissières 19 est monté, par l'intermédiaire de patins de glissement 21, un ensemble comportant un vérin de traction 22, une glissière 23 parallèle à l'axe d'actionnement du vérin 22 et un bloc d'appui 24.

La tige du vérin 22 est solidaire d'une tête de traction 25 montée mobile sur les glissières 23.

Le vérin 22 permet de déplacer la tête de brochage 25 sur les glissières 23, dans la direction de l'axe de brochage 15a de la ligne de brochage 14a.

Le vérin-étau 20 permet de déplacer l'ensemble constitué par le vérin 22, les glissières 23 et le bloc d'appui 24 entre une position reculée, dans laquelle le bloc d'appui 24 n'est pas en contact avec la plaque à brocher 2 et une position d'appui contre la plaque représentée sur la figure 3A.

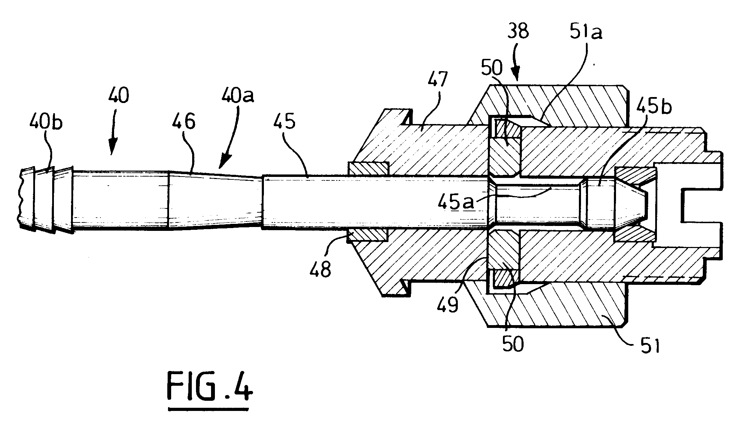

La tête de brochage 25 comporte un ensemble de fourreaux permettant de réaliser la fixation d'un ensemble de broches, dans des directions parallèles à l'axe de brochage 15a, par l'intermédiaire de l'une de leurs extrémités, comme il sera expliqué en regard de la figure 4.

Les fourreaux de fixation des broches sur la tête de brochage 25 sont montés de manière à pouvoir faire varier l'entraxe entre les broches, entre deux valeurs extrêmes.

On peut ainsi modifier la tête de brochage pour réaliser le brochage de plaques comportant des réseaux d'avant-trous ayant des entraxes différents.

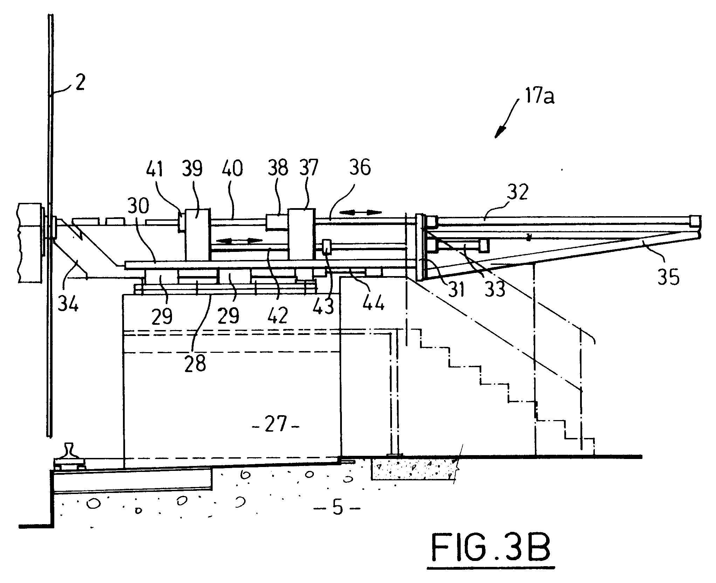

Comme il est visible sur la figure 3B, un dispositif d'accompagnement tel que 17a comporte un support 27 reposant sur le sol 5 de l'atelier et portant sur sa surface supérieure, des glissières 28. Sur les glissières 28, est monté par l'intermédiaire de patins de glissement 29, un ensemble comportant une glissière longitudinale 30 parallèle aux glissières 28, une plaque de support 31 solidaire de la glissière 30, un vérin d'accompagnement 32 et un vérin d'engagement 33 portés par la plaque 31 et un bloc d'appui 34.

Les vérins 32 et 33 sont supportés par la plaque 31, par l'intermédiaire d'une structure de renforcement 35.

La tige 36 du vérin 32 est solidaire d'une tête d'accompagnement 37 sur laquelle un groupe de broches 40 peut être fixé par l'intermédiaire de pinces 38.

La tête d'accompagnement 37 est montée mobile sur la glissière 30.

Sur la glissière 30 est également monté mobile un chariot d'engagement 39 comportant des pinces 41 pouvant assurer le serrage et l'entraînement des broches 40.

La tige 42 du vérin d'engagement 33 traverse la tête d'accompagnement 37 de manière glissante pour être fixée par sa partie d'extrémité sur le chariot d'engagement 39.

Une butée 43 est fixée sur la tige 42 à l'arrière de la tête d'accompagnement 37.

Un vérin 44 appelé vérin d'étau fixé sur une partie du support 27 comporte une tige solidaire de la glissière 30, elle-même solidaire de la plaque 31, des vérins 32 et 33 et du bloc d'appui 34 qui constituent un ensemble monté mobile sur les glissières 28.

Le vérin d'étau 44 permet de déplacer l'ensemble entre une position reculée et une position d'appui sur la plaque 2, comme représenté sur la figure 3B.

Comme il est visible sur la figure 4, les broches 40 comportent une partie d'extrémité 40a permettant leur introduction et leur fixation à l'intérieur d'une pince-fourreau telle qu'une pince 38 d'un dispositif de traction ou d'accompagnement. La partie d'extrémité 40a de la broche 40, dans le prolongement axial de la partie d'usinage 40b de la broche présentant des arêtes de coupe, comporte une partie à diamètre réduit 45 et une partie 46 de transition entre la partie à diamètre réduit 45 et la partie d'usinage 40b de la broche.

La partie d'extrémité à diamètre réduit 45 comporte une gorge d'accrochage 45a et à la suite de cette partie d'accrochage, à son extrémité, une olive de guidage 45b de forme tronconique.

Le dispositif d'accrochage à pinces 38 comporte un fourreau 47 de forme tubulaire à une extrémité duquel est fixée une bague de guidage 48 dont le diamètre intérieur est sensiblement égal au diamètre de la partie 45 de la broche, de part et d'autre de la gorge 45a et des lumières 49 de direction radiale dans lesquelles sont placées des pièces de verrouillage 50.

Lorsque la broche 40 est engagée entièrement par sa partie 45 à l'intérieur du fourreau 47 du dispositif 38, la gorge 45a se trouve située en face des lumières 49 et des pièces de verrouillage 50.

Un piston d'actionnement 51 est engagé sur le corps 47 du dispositif 38 et comporte une gorge interne 51a comportant des parties d'extrémité d'actionnement tronconiques susceptibles de venir en contact avec des parties d'actionnement correspondantes des mors de verrouillage 50, lors du déplacement du piston 51 dans la direction axiale du fourreau 47.

On peut ainsi réaliser, après engagement de la partie 45 de la broche à l'intérieur du fourreau 47, le verrouillage de cette broche à l'intérieur du fourreau, par déplacement axial du piston 51 qui est maintenu dans la position de verrouillage des mors 50.

Le déplacement du piston 51 dans le sens du verrouillage ou du déverrouillage des mors 50 est réalisé de manière totalement automatique, lors du cycle de fonctionnement de l'installation de brochage, qui sera décrit plus loin.

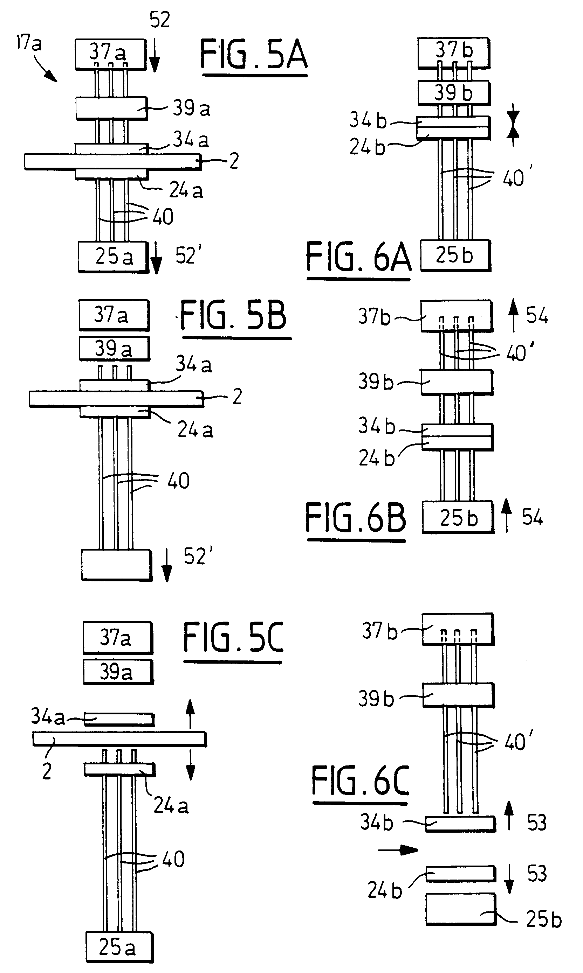

On va maintenant décrire, en se référant aux figures 5A, 5B et 5C et 6A, 6B et 6C, le fonctionnement de l'installation de brochage, lors d'un cycle complet de brochage sur l'une des lignes de brochage et de remise en position des broches pour un nouveau cycle sur la seconde ligne de brochage.

Sur les figures 5A, 5B et 5C, on a représenté la première ligne de brochage 14a comprenant le dispositif de traction 16a et le dispositif d'accompagnement 17a. Le dispositif d'accompagnement 17a comporte lui-même la tête d'accompagnement 37a, le chariot d'engagement 39a et le bloc d'appui 34a solidaire d'un ensemble comportant les glissières de guidage de la tête 37a et du chariot 39a.

Le dispositif de traction 16a comporte la tête de traction 25a et le bloc d'appui 24a solidaire d'un ensemble comportant les glissières de guidage de la tête 25a.

Comme il est visible sur les figures 6A, 6B et 6C, la ligne de brochage 14b sur laquelle se trouvent les dispositifs d'accompagnement 17b et 16b comporte des éléments 37b, 39b, 34b, 25b et 24b similaires aux éléments 37a, 39a, 34a, 25a et 24a de la ligne de brochage 14a.

La ligne de brochage 14a comporte des broches 40 qui peuvent être déplacées pour réaliser le brochage par le dispositif de traction 16a et le dispositif d'accompagnement 17a dont les têtes se déplaçent simultanément sur les glissières de guidage.

La ligne de brochage 14b comporte des broches 40' qui peuvent être remises en position initiale par les dispositifs 16b et 17b, simultanément au brochage sur la ligne 14a.

On a représenté trois broches 40 (ou 40') sur chacune des lignes de brochage, les broches 40 ou 40' pouvant être fixées par l'intermédiaire de fourreaux tels que décrits en regard de la figure 4, sur chacun des dispositifs de traction et d'accompagnement. Les fourreaux sont eux-mêmes montés de manière que les entraxes entre les broches 40 ou 40' puissent être réglés à la valeur des pas du réseau des trous d'une plaque 2 à brocher.

Sur les figures 5A, 5B, 5C correspondant à la ligne de brochage 14a, on a représenté la plaque 2 en position de brochage, ce brochage étant effectué par passage des broches 40 à l'intérieur des avant-trous de la plaque 2, dans le sens indiqué par les flèches 52 et 52' figurant le déplacement des têtes 25a et 37a.

Les broches sont fixées par des fourreaux de verrouillage tels que décrits plus haut, à l'une de leurs extrémités dans la tête de traction 25a et à leur autre extrémité dans la tête d'accompagnement 37a. Les pinces du chariot d'accompagnement 39a sont en position desserrée, de sorte que les broches se déplacent par glissement à l'intérieur du chariot 39a qui assure uniquement leur maintien et leur guidage. Les blocs d'appui 24a et 34a sont maintenus par les vérins d'étau contre les faces opposées de la plaque 2.

Pendant l'opération de brochage complet de la plaque 2, schématisée sur les figures 5A, 5B et 5C, on réalise, sur la seconde ligne de brochage 14b, une remise en position initiale des broches 40' après une opération de brochage, schématisée sur les figures 6A, 6B et 6C.

A l'issue d'une opération de brochage, comme il est visible sur la figure 5B correspondant à la ligne de brochage 14a, on déverrouille les pinces de fixation des broches 40 sur la tête d'accompagnement 37a. La tête d'accompagnement 37a est arrêtée dans une position d'attente et on continue à déplacer la tête de traction 25a et les broches 40 jusqu'à une position où les broches 40 sont engagées uniquement dans le bloc d'appui 34a du côté accompagnement.

On arrête alors la tête de traction 25a et on sépare les blocs d'appui 24a et 34a par manoeuvre des vérins d'étau 20 et 44, comme il est visible sur la figure 5C.

Les broches 40 sont alors maintenues par la tête de traction 25a et le bloc d'appui 24a.

La plaque 2 est alors libérée et peut être transférée par les dispositifs de déplacement dans la direction transversale, dans la seconde ligne de brochage.

On va décrire, en se référant aux figures 6A, 6B et 6C correspondant à la seconde ligne de brochage 14b, les opérations qui sont nécessaires pour remettre dans leur position initiale les composants d'une ligne de brochage, après une opération de brochage et après le transfert de la plaque à brocher vers la seconde ligne de brochage.

Sur la figure 6A, on a représenté les composants de la ligne de brochage 14b, dans une phase ultérieure au transfert de la plaque, pendant laquelle on réalise le déplacement des blocs d'appui 24b et 34b par les vérins d'étau pour les mettre en contact l'un avec l'autre.

Préalablement à ce déplacement des blocs d'appui, on réalise un prépositionnement de la tête d'accompagnement 37b de manière que les broches 40' soient engagées dans les fourreaux de la tête d'accompagnement lors du déplacement des blocs d'appui et de l'ensemble des dispositifs d'accompagnement et de traction dans le sens de leur rapprochement.

L'extrémité libre des broches 40' étant à l'intérieur des fourreaux des dispositifs de verrouillage 38 de la tête d'accompagnement 37b, les dispositifs de verrouillage 38 sont activés de manière à assurer la liaison entre l'extrémité des broches 40' et la tête d'accompagnement 37b. Comme il est visible sur la figure 6B, on déplace la tête d'accompagnement 37b, les broches 40' et la tête de traction 25b, dans le sens de la flèche 54, pour assurer le retour des broches 40' dans leur position initiale. On déverrouille ensuite les extrémités des broches 40' engagées dans la tête de traction 25b qui reste dans une position d'attente. Les blocs d'appui 24b et 34b restent serrés l'un contre l'autre.

Le déplacement de la tête d'accompagnement 37b dans le sens de la flèche 54 permet de replacer les broches 40' dans une position dégagée des blocs 24b et 34b qui est représentée sur la figure 6C ; dans cette position dégagée des blocs 24b et 34b, les broches 40' restent engagées dans le chariot 39b et comportent une partie d'extrémité libre à l'avant du chariot 39b située une certaine distance de la tête de traction 25b dans sa position d'attente.

On peut alors séparer les blocs 24b et 34b l'un de l'autre (flèches 53) pour obtenir un espace libre permettant de recevoir la plaque 2 amenée latéralement.

La plaque 2 qui a été libérée des blocs d'appui de la ligne de brochage 14a et des broches 40 peut être déplacée (flèche 59) pour venir en position de travail dans la ligne 14b, entre les blocs d'appui 24b et 34b.

On remet ensuite les blocs 24b et 34b en appui contre les faces de la plaque 2.

On va maintenant décrire une opération d'engagement des broches dans la plaque 2 et dans une tête de traction 25 en se référant aux figures 3A et 3B. Cette opération est réalisée après mise en place de la plaque en position de travail et serrage des blocs d'appui 24 et 34.

On réalise le serrage des pinces du chariot d'engagement 39 et le desserrage des dispositifs de verrouillage 38 de la tête d'accompagnement 37.

On déplace le chariot d'engagement 39 en direction de la plaque 2 et on entraîne la tête d'accompagnement 37 dans le même sens par l'intermédiaire de la butée 43.

On amène ainsi les broches 40 de manière parfaitement guidée en face d'ouvertures à brocher de la plaque 2.

Les broches 40 déplacées par le chariot d'engagement 39 sont introduites dans des avant-trous de la plaque 2, par une partie d'engagement 45 telle que représentée sur la figure 4.

Les parties d'engagement 45 des broches 40' sont ensuite introduites dans les fourreaux de verrouillage de la tête de traction 25.

On réalise le serrage des dispositifs de verrouillage de la tête d'engagement 37 et de la tête de traction 25.

On peut alors effectuer le brochage, comme décrit précédemment en ce qui concerne la ligne de brochage 14a (figures 5A, 5B et 5C), après libération des pinces du chariot d'engagement 39.

Pendant le brochage, le chariot d'engagement 39 reste en place, le maintien de l'extrémité des broches 40 étant assuré par la tête d'accompagnement 37.

Simultanément au brochage sur la ligne 14b, on effectue la remise en position initiale des composants de la ligne de brochage 14a et en particulier des broches 40, comme il a été décrit plus haut en ce qui concerne la ligne de brochage 14b.

Les opérations de remise en position initiale des broches sur une ligne sont effectuées pendant une opération de brochage sur la seconde ligne de brochage, de sorte que cette opération est réalisée en temps masqué.

On accroît donc ainsi la cadence de production et le rendement de l'installation de brochage. Ce résultat est obtenu sans avoir à réaliser de manutentions complexes des broches sur les lignes de brochage.

Les moyens de déplacement de la plaque à brocher 2 suivant la direction horizontale et suivant la direction verticale tels que représentés sur les figures 1 et 2, permettent de placer cette plaque, successivement au niveau d'une ligne de brochage et de l'autre et de manière à réaliser par passes successives le brochage de tous les avant-trous traversant la plaque.

En fait, la position en hauteur des dispositifs de traction et d'accompagnement permet de réaliser successivement, le brochage de tous les avant-trous traversant la demi-plaque inférieure, c'est-à-dire la partie inférieure de la plaque délimitée par son diamètre de direction horizontale.

Lorsque le brochage des avant-trous d'une demi-plaque a été réalisé, on fixe la plaque 2 à un palan ou un crochet de levage d'un pont roulant, de manière à la transporter dans une position 2'' où la plaque vient reposer sur des galets à axes horizontaux 55 d'un vireur.

Le vireur permet de retourner la plaque, de manière à réaliser, après remise en place de la plaque sur son support 3, le brochage des trous de la seconde demi-plaque, par passes successives sur l'une et l'autre lignes de brochage 14a, 14b.

Au cours du brochage, la plaque est mise en place dans des positions bien définies et préprogrammées par les moyens de déplacement horizontaux et verticaux 8a, 8b ; 9a, 9b ; 10a, 10b.

Dans ses positions extrêmes vers la droite ou vers la gauche, le support 3 est arrêté par les butées 6a et 6b.

L'ensemble des déplacements de la plaque et des dispositifs de traction et d'accompagnement ainsi que la manoeuvre des organes de serrage et de verrouillage de ces dispositifs sont réalisés de manière automatique et pré-programmée.

On évite ainsi les erreurs et les temps morts pendant l'utilisation de l'installation de brochage.

De plus, le fait d'avoir deux lignes de brochage fonctionnant de manière indépendante permet de poursuivre l'opération de brochage même si une ligne de brochage devient indisponible par suite d'une avarie sur l'un des éléments.

Le passage des broches à travers la plaque 2 produit des copeaux qui sont entraînés du côté du dispositif de traction.

Ces copeaux sont récupérés à l'intérieur d'une rigole 56 disposée horizontalement sur le sol 5 de l'atelier, par un transporteur continu 57 dont la partie de sortie se trouve au-dessus d'un bac de récupération de copeaux 58.

L'invention ne se limite pas au mode de réalisation qui a été décrit.

En particulier, les moyens de déplacement de la plaque suivant deux directions parallèles à ses faces peuvent être réalisées sous une forme différente de celle qui a été décrite.

De même, les dispositifs de traction et d'accompagnement peuvent présenter une structure et une forme différentes de celles qui ont été décrites.

Enfin, l'installation suivant l'invention et le procédé de brochage correspondant peuvent être utilisés dans le cas du brochage de plaques différentes de plaques-entretoises de générateur de vapeur.

## Revendications

1. Installation de brochage d'ouvertures de traversée d'une plaque (2) par passage d'une broche profilée (40, 40'), successivement à travers chacun des avant-trous d'un réseau d'avant-trous traversant la plaque (2), comportant un support de maintien (3) de la plaque (2) en position de brochage, des moyens de déplacement (8a, 8b ; 9a, 9b ; 10a, 10b) de la plaque (2) suivant au moins deux directions parallèles à ses faces et de positionnement de cette plaque (2), des moyens de traction (16a, 16b) et des moyens d'accompagnement (17a, 17b) d'au moins une broche (40, 40') disposés de part et d'autre de la plaque (2) en position de travail et constituant au moins deux ensembles de brochage (14a, 14b) alignés chacun suivant un axe perpendiculaire aux faces de la plaque à brocher (2) en position de brochage sur son support (3), le dispositif de traction (16a, 16b) et le dispositif d'accompagnement (17a, 17b) de chaque ensemble de brochage ayant des axes de déplacement alignés suivant un axe de travail (15a, 15b) commun, caractérisée par le fait que les deux ensembles de brochage constituent deux lignes de brochage (14a, 14b) à action successive, que les axes de travail (15a, 15b) des deux lignes de brochage (14a, 14b) sont séparés par une distance au moins égale à la dimension maximale de la plaque (2) suivant une première direction de déplacement de cette plaque (2), les deux dispositifs de traction (16a, 16b) des lignes de brochage (14a, 14b) d'une part et les deux dispositifs d'accompagnement (17a, 17b) d'autre part sont disposés d'un même côté de la plaque à brocher (2) en position de brochage sur son support (3) et les moyens de déplacement (8a, 8b ; 9a, 9b) de la plaque sur son support (3) sont prévus pour déplacer la plaque (2) entre une première position de brochage d'au moins une ouverture quelconque de la plaque (2), dans la première ligne de brochage (14a) et une seconde position de brochage d'au moins une ouverture quelconque dans la seconde ligne de brochage (14b).

2. Installation suivant la revendication 1, caractérisée par le fait que la plaque (2) à brocher est une plaque de forme circulaire disposée dans une position verticale sur un support (3) monté mobile par l'intermédiaire de moyens de roulement (8a, 8b) sur un rail horizontal (4) et comportant des colonnes verticales (7a, 7b) sur lesquelles sont fixées des glissières (9a, 9b) de guidage d'un chariot (11) sur lequel est fixée la plaque (2).

3. Installation suivant la revendication 2, caractérisée par le fait que la plaque à brocher (2) est fixée sur le chariot (11), par l'intermédiaire d'axes de fixation et de taquets de retenue engagés dans des ouvertures en coïncidence constituées par des avant-trous de la plaque (2) et des ouvertures du chariot (11).

4. Installation suivant l'une quelconque des revendications 1 à 3, caractérisée par le fait que chacun des dispositifs de traction (16a) comporte un ensemble monté mobile sur une première glissière (19) fixée sur un support (18) dans la direction de l'axe d'une ligne de brochage (14a) et comportant un vérin de traction (22) et une seconde glissière (23) de direction axiale ainsi qu'un bloc d'appui (24) sur une face de la plaque à brocher (2), la tige du vérin (22) étant solidaire d'une tête de traction (25) montée mobile sur la seconde glissière (23) et comportant des moyens de verrouillage de l'extrémité d'une broche (40).

5. Installation suivant la revendication 4, caractérisée par le fait que chacun des dispositifs de traction (16a) comporte de plus un vérin d'étau (20) porté par le support fixe (18) et comportant une tige reliée à l'ensemble mobile constitué par le vérin de traction (22), la seconde glissière (23) et le bloc d'appui (24), pour son déplacement entre une position en appui, par l'intermédiaire de la tête d'appui (24) contre la plaque à brocher (2) et une position de retrait dans laquelle la tête d'appui (24) n'est pas en contact avec la plaque à brocher (2).

6. Installation suivant l'une quelconque des revendications 1 à 5, caractérisée par le fait que chacun des dispositifs d'accompagnement (17a) comporte une première glissière (28) fixée sur un support (27) dans la direction de l'axe d'une ligne de brochage (14a) et un ensemble monté mobile sur la première glissière (28), constitué d'un bloc d'appui (34) sur une face de la plaque à brocher (2), d'un vérin d'accompagnement (32), d'une seconde glissière (30) et d'un moyen (33) de déplacement dans la direction axiale d'un chariot d'engagement (39) mobile sur la seconde glissière (30), la tige du vérin d'accompagnement (32) étant solidaire d'une tête d'accompagnement (37) montée mobile sur la seconde glissière (30) et munie de pinces (38) de fixation d'une extrémité d'une broche (40) dans l'alignement de pinces de serrage (41) solidaires du chariot d'engagement (39) et le chariot d'engagement (39) comportant des moyens (42, 43) d'entraînement de la tête d'accompagnement (37) par traction.

7. Installation suivant l'une quelconque des revendications 1 à 6, caractérisée par le fait qu'elle comporte de plus des moyens de commande automatiques des moyens de déplacement (8a, 8b ; 9a, 9b ; 10a, 10b) de la plaque (2), des dispositifs de traction (16a, 16b) et des dispositifs d'accompagnement (17a, 17b) de chacune des deux lignes de brochage (14a, 14b), pour réaliser simultanément le brochage d'au moins une ouverture dans la plaque (2) par déplacement d'une broche (40, 40') dans l'une des lignes de brochage (14a, 14b) et le retour des dispositifs de traction (16a, 16b) et d'accompagnement (17a, 17b) et de la broche (40, 40') vers une position initiale de brochage, dans la seconde ligne de brochage.

8. Procédé de brochage d'ouvertures de traversée d'une plaque (2) en utilisant une installation selon l'une quelconque des revendications 1 à 7, caractérisé par le fait qu'on effectue, en temps masqué, pendant une opération de brochage sur l'une des lignes de brochage (14a), le retour du dispositif de traction (16b), du dispositif d'accompagnement (17b) et de la broche (40') de la seconde ligne de brochage (14b), dans une disposition initiale permettant de commencer une opération de brochage sur la seconde ligne de brochage (14b).

9. Procédé suivant la revendication 8, caractérisé par le fait que l'opération de brochage sur la première ligne (14a) est effectuée par passage d'au moins une broche (40) reliée à l'une de ses extrémités à une tête mobile d'un dispositif de traction (16a) et à son autre extrémité à une tête d'accompagnement mobile du dispositif d'accompagnement (17a), à travers au moins une ouverture de la plaque (2), que vers la fin de l'opération de brochage par passage de la broche (40) à travers l'ouverture de traversée de la plaque (2), on libère la broche (40) de sa liaison à la tête d'accompagnement (37a) du dispositif d'accompagnement (17a) et qu'on éloigne l'un de l'autre les ensembles mobiles du dispositif de traction (16a) et du dispositif d'accompagnement (17a) pour obtenir un dégagement complet de la broche (40) de la plaque (2) et une libération de la plaque (2).

10. Procédé suivant l'une quelconque des revendications 8 et 9, caractérisé par le fait qu'on réalise le retour du dispositif d'accompagnement (17b) et de la broche (40') d'une seconde ligne de brochage (14b) pendant le brochage sur la première ligne de brochage (14a) en réalisant successivement, le déplacement des ensembles mobiles du dispositif de traction (16b) et du dispositif d'accompagnement (17b) de la seconde ligne de brochage (14b) dans la direction axiale, l'un vers l'autre pour obtenir l'engagement de l'extrémité de la broche (40') opposée au dispositif de traction (16b) dans une partie de réception d'une tête mobile d'accompagnement du dispositif d'accompagnement (17b), le verrouillage de l'extrémité de la broche (40') dans la tête d'accompagnement (37b), le déplacement de la broche (40') et des têtes de traction (25b) et d'accompagnement (37b) dans le sens inverse du brochage puis la séparation de la broche (40') de la tête de traction (16b) par déplacement dans la direction axiale de la tête d'accompagnement (37b) entraînant la broche (40'), dans une direction opposée à la tête de traction (25b).

11. Procédé suivant l'une quelconque des revendications 8, 9 et 10, caractérisé par le fait qu'à l'issue d'une opération de brochage sur la première ligne de brochage (14a) et d'une opération de retour dans une position initiale des éléments de la seconde ligne de brochage (14b), on déplace la plaque à brocher (2) jusqu'à une position de brochage sur la seconde ligne de brochage (14b), on réalise le serrage de pinces d'un chariot d'engagement (39b) sur la broche (40') de la seconde ligne de brochage (14b), on déplace le chariot d'engagement (39b) en direction de la plaque à brocher (2) et, par son intermédiaire, la tête d'accompagnement (37b) du dispositif d'accompagnement (17b), on engage la broche (40') dans un avant-trou de la plaque à brocher (2), puis dans une ouverture de réception de la tête de traction (25b) du dispositif de traction (16b) et on réalise le verrouillage d'une extrémité de la broche (40') dans l'ouverture de réception de la tête de traction (25b) et de l'autre extrémité de la broche (40') dans une ouverture de réception de la tête d'accompagnement (37b).

## Claims

1. Apparatus for broaching through-openings in a plate (2) by passing a profiled broach (40, 40') successively through each of the pilot holes of a grid of pilot holes across the plate (2), comprising a support (3) for holding the plate (2) in the broaching position, means (8a, 8b; 9a, 9b; 10a, 10b) for displacing the plate (2) in at least two directions parallel to its surfaces and for positioning said plate (2), traction means (16a, 16b) and accompanying means (17a, 17b) for at least one broach (40, 40') which are arranged on both sides of the plate (2) in the working position and constitute at least two broaching assemblies (14a, 14b) each aligned along an axis perpendicular to the surfaces of the plate which is to be broached (2) in the broaching position on its support (3), the traction devices (16a, 16b) and accompanying devices (17a, 17b) for each broaching assembly having displacement axes aligned along a common working axis (15a, 15b), characterised in that the two broaching assemblies constitute two broaching lines (14a, 14b) acting successively, the working axes (15a, 15b) of the two broaching lines (14a, 14b) are separated by a spacing at least equal to the maximum dimension of the plate (2) in a first direction of displacement of this plate (2), the two traction devices (16a, 16b) of the broaching lines (14a, 14b) on the one hand and the two accompanying devices (17a, 17b) on the other hand are arranged on the same side of the plate which is to be broached (2) in the broaching position on its support (3) and the means (8a, 8b; 9a, 9b) for displacing the plate on its support (3) are provided in order to move the plate (2) between a first position for broaching at least one opening on the plate (2), in the first broaching line (14a), and a second position for broaching at least one opening in the second broaching line (14b).

2. Apparatus according to claim 1, characterised in that the plate (2) to be broached is a circular plate arranged in a vertical position on a support (3) mounted to be movable along a horizontal rail (4) by means of rolling means (8a, 8b) and comprising vertical columns (7a, 7b) on which are fixed guide runners (9a, 9b) for a carriage (11) on which the plate (2) is fixed.

3. Apparatus according to claim 2, characterised in that the plate (2) to be broached is fixed to the carriage (11) by means of fixing pins and retaining stops engaging in corresponding openings formed by pilot holes in the plate (2) and openings in the carriage (11).

4. Apparatus according to any one of claims 1 to 3, characterised in that each of the traction devices (16a) comprises an assembly mounted so as to be movable on a first runner (19) fixed to a support (18) in the direction of the axis of a broaching line (14a) and comprising a traction jack (22) and a second axially directed runner (23) and an abutment block (24) bearing on a surface of the plate (2) which is to be broached, the rod of the jack (22) being integrally connected to a traction head (25) movably mounted on the second runner (23) and comprising means for securing the end of a broach (40).

5. Apparatus according to claim 4, characterised in that each of the traction devices (16a) further comprises a vice jack (20) carried by the fixed support (18) and comprising a rod connected to the movable assembly consisting of the traction jack (22), the second runner (23) and the abutment block (24), for moving it between a position of abutment, via the abutment head (24), against the plate which is to be broached (2) and a retracted position in which the abutment head (24) is not in contact with the plate (2) which is to be broached.

6. Apparatus according to any one of claims 1 to 5, characterised in that each of the accompanying devices (17a) comprises a first runner (28) fixed to a support (27) in the direction of the axis of a broaching line (14a) and an assembly mounted so as to be movable on the first runner (28), consisting of an abutment block (34) bearing on one side of the plate which is to be broached (2), an accompanying jack (32), a second runner (30) and means (33) for axially displacing an engaging carriage (39) which is movable on the second runner (30), the rod of the accompanying jack (32) being integrally connected to an accompanying head (37) movably mounted on the second runner (30) and provided with grips (38) for attaching one end of a broach (40) in alignment with clamping grips (41) integrally connected to the engaging carriage (39) and the engaging carriage (39) comprising means (42, 43) for driving the accompanying head (37) by traction.

7. Apparatus according to any one of claims 1 to 6, characterised in that it further comprises automatic control means for the means (8a, 8b, 9a, 9b; 10a, 10b) for displacing the plate (2), the traction devices (16a, 16b) and the accompanying devices (17a, 17b) for each of the two broaching lines (14a, 14b), for the purpose of simultaneously broaching at least one opening in the plate (2) by moving a broach (40, 40') in one of the broaching lines (14a, 14b) and returning the traction devices (16a, 16b) and accompanying devices (17a, 17b) and the broach (40, 40') towards an initial broaching position, in the second broaching line.

8. Method of broaching through-openings in a plate (2) using an apparatus according to any one of claims 1 to 7, characterised in that at the same time as a broaching operation is taking place on one of the broaching lines (14a), the traction device (16b), the accompanying device (17b) and the broach (40') of the second broaching line (14b) are returned to an original arrangement enabling a broaching operation to be carried out on the second broaching line (14b).

9. Method according to claim 8, characterised in that the broaching operation on the first line (14a) is carried out by passing at least one broach (40), connected at one end to a movable head of a traction device (16a) and at its other and to a movable accompanying head of the accompanying device (17a), through at least one opening in the plate (2), in that, towards the end of the operation of broaching by passing the broach (40) through the through-opening in the plate (2), the broach (40) is freed from its attachment to the accompanying head (37a) of the accompanying device (17a) and the movable assemblies of the traction device (16a) and accompanying device (17a) are moved away from each other to disengage the broach (40) completely from the plate (2) and free the plate (2).

10. Method according to one of claims 8 and 9, characterised in that the accompanying device (17b) and the broach (40') are returned from a second broaching line (14b) during the broaching on the first broaching line (14a), by successively moving the movable assemblies of the traction device (16b) and the accompanying device (17b) of the second broaching line (14b) towards one another in the axial direction, to cause the end of the broach (40') opposite the traction device (16b) to engage in a receiving portion of a movable accompanying head of the accompanying device (17b), to effect securing of the end of the broach (40') in the accompanying head (37b), the movement of the broach (40') and of the traction and accompanying heads (25b), (37b), respectively, in the direction opposite to that of the broaching, then separation of the broach (40') from the traction head (16b) by displacement, in the axial direction, of the accompanying head (37b) driving the broach (40'), in the opposite direction to the traction head (25b).

11. Method according to any one of claims 8, 9 and 10, characterised in that, at the end of a broaching operation on the first broaching line (14a) and an operation of returning the elements of the second broaching line (14b) to their original positions, the plate (2) which is to be broached is moved to a broaching position on the second broaching line (14b), the grips of an engaging carriage (39b) are clamped to the broach (40') of the second broaching line (14b), the engaging carriage (39b) is moved towards the plate (2) which is to be broached and, as a result, the accompanying head (37b) of the accompanying device (17b) is moved, the broach (40') is engaged in a pilot hole in the plate which is to be broached (2), then in a receiving aperture in the traction head (25b) of the traction device (16b) and one end of the broach (40') is locked in the receiving aperture of the traction head (25b) and the other end of the broach (40') is secured in a receiving aperture in the accompanying head (37b).

## Patentansprüche

1. Vorrichtung zum Aufbohren von Durchgangslöchern in einer Platte (2) durch aufeinanderfolgendes Führen einer Profilspindel (40,40') durch jedes Vorbohrloch einer Anordnung von die Platte (2) durchsetzenden Vorbohrlöchern, aufweisend eine Halterungseinrichtung (3) für die Platte (2) in Aufbohrposition, Mittel (8a, 8b; 9a, 9b; 10a, 10b) zum Verschieben der Platte (2) entlang zumindest zweier Richtungen parallel zu ihren Oberflächen und zum Positionieren dieser Platte (2), Zugfördermittel (16a, 16b) und Mitnahmemittel (17a, 17b) für zumindest eine Spindel (40, 40'), die beiderseits der Platte (2) in Arbeitsposition angeordnet sind und zumindest zwei Aufbohreinheiten (14a, 14b) bilden, die jeweils entlang einer Achse senkrecht zu den Oberflächen der aufzubohrenden Platte (2) in Aufbohrposition auf ihrer Halterung (3) ausgerichtet sind, wobei die Zugfördervorrichtung (16a, 16b) und die Mitnahmevorrichtung (17a, 17b) jeder Aufbohreinheit Verschiebungsachsen aufweist, die entlang einer gemeinsamen Arbeitsachse (15a, 15b) ausgerichtet sind, dadurch gekennzeichnet, daß die zwei Aufbohreinheiten zwei aufeinanderfolgend betätigte Aufbohrstrecken (14a, 14b) bilden, daß die Arbeitsachsen (15a, 15b) der zwei Aufbohrstrecken (14a, 14b) um einen Abstand getrennt sind, der zumindest der maximalen Abmessung der Platte (2) entlang einer ersten Verschiebungsrichtung dieser Platte (2) entspricht, wobei die zwei Zugfördervorrichtungen (16a, 16b) der Aufbohrstrecken (14a, 14b) einerseits und die zwei Mitnahmevorrichtungen (17a, 17b) andererseits auf derselben Seite der aufzubohrenden Platte (2) in Aufbohrposition auf der Halterung (3) angeordnet sind, und wobei die Mittel (8a, 8b; 9a, 9b) zum Verschieben der Platte auf ihrer Halterung (3) dazu vorgesehen sind, die Platte (2) zwischen einer ersten Aufbohrposition einer beliebigen Öffnung der Platte (2) in der ersten Aufbohrstrecke (14a) und einer zweiten Aufbohrposition zumindest einer beliebigen Öffnung in der zweiten Aufbohrstrecke (14b) zu verschieben.

2. Vorrichtung nach Anspruch 1, dadurch gekennzeichnet, daß es sich bei der aufzubohrenden Platte (2) um eine kreisförmige Platte handelt, die in einer vertikalen Position auf einer Halterung (3) angeordnet ist, die unter Zwischenschaltung von Rollmitteln (8a, 8b) auf einer horizontalen Schiene (4) beweglich angebracht ist und vertikale Säulen (7a, 7b) umfaßt, auf welchen Gleitschienen (9a, 9b) zur Führung eines Schlittens (11) befestigt sind, auf welchem die Platte (2) fixiert ist.

3. Vorrichtung nach Anspruch 2, dadurch gekennzeichnet, daß die aufzubohrende Platte (2) auf dem Schlitten (11) unter Zwischenschaltung von Fixierungsachsen und Rückhalteanschlägen fixiert ist, die in deckungsgleiche Öffnungen eingreifen, welche durch die Vorbohrlöcher der Platte (2) und die Öffnungen des Schlittens (11) gebildet sind.

4. Vorrichtung nach einem der Ansprüche 1 bis 3, dadurch gekennzeichnet, daß jede der Zugfördervorrichtungen (16a) eine Einheit umfaßt, die auf der ersten Gleitschiene (19), welche auf einer Halterung (18) befestigt ist, in der Richtung der Achse einer Vorbohrstrecke (14a) beweglich angebracht ist und einen Zugförderstelltrieb (22) sowie eine zweite Gleitschiene (23) mit axialer Ausrichtung sowie einen Anschlagblock (24) auf einer Oberfläche der aufzubohrenden Platte (2) umfaßt, wobei die Stelltriebstange (22) mit einem Zugförderkopf (25) fest verbunden ist, der auf der zweiten Gleitschiene (23) beweglich angebracht ist und Mittel zum Verriegeln bzw. Blockieren des Endes einer Spindel (40) umfaßt.

5. Vorrichtung nach Anspruch 4, dadurch gekennzeichnet, daß jede der Zugfördervorrichtungen (16a) außerdem einen Gewindespindelstelltrieb (20) umfaßt, der durch die feststehende Halterung (18) getragen ist und eine Stellstange umfaßt, die mit der durch den Zugförderstelltrieb (22) gebildeten beweglichen Einheit, der zweiten Gleitschiene (23) und dem Anlageblock (24) für seine Verschiebung zwischen einer Anlageposition bei dazwischengestaltetem Anlagekopf (24) gegen die aufzubohrende Platte (2) und einer Rückstellposition verbunden ist, in welcher der Anlagekopf (24) nicht im Kontakt mit der aufzubohrenden Platte (2) steht.

6. Vorrichtung nach einem der Ansprüche 1 bis 5, dadurch gekennzeichnet, daß jede der Mitnahmevorrichtungen (17a) eine erste Gleitschiene (28) aufweist, die auf einer Halterung (27) in der Richtung der Achse einer Aufbohrstrecke (14a) befestigt ist, und eine Einheit, die auf der ersten Gleitschiene (28) beweglich angebracht ist, die durch einen Anlageblock (34) auf einer Seite der aufzubohrenden Platte (2), einen Mitnahmestelltrieb (32), eine zweite Gleitschiene (30) und ein Mittel (33) zur Verschiebung eines Eingriffschlittens (39) in der axialen Richtung besteht, der auf der zweiten Gleitschiene (30) beweglich ist, wobei die Stange des Mitnahmestelltriebs (32) fest mit einem Mitnahmekopf (37) verbunden ist, der auf der zweiten Gleitschiene (30) beweglich angebracht und mit Zangen (38) zur Fixierung eines Endes einer Spindel (40) in Ausrichtung mit einer Spannzange (41) versehen ist, die mit dem Eingriffschlitten (39) fest verbunden ist, und wobei der Eingriffschlitten (39) Mittel (42, 43) zur Zugfördermitnahme des Mitnahmekopfs (37) umfaßt.

7. Vorrichtung nach einem der Ansprüche 1 bis 6, dadurch gekennzeichnet, daß sie außerdem Mittel zur automatischen Steuerung der Mittel (8a, 8b; 9a, 9b; 10a, 10b) zur Verschiebung der Platte (2), der Zugfördervorrichtung (16a, 16b) und der Mitnahmevorrichtungen (17a, 17b) für jede der zwei Aufbohrstrecken (14a, 14b) umfaßt, um gleichzeitig das Aufbohren von zumindest einer Öffnung in der Platte (2) durch Verschiebung einer Spindel (40, 40') in einer der Aufbohrstrecken (14a, 14b) und das Rückstellen der Zugfördervorrichtungen (16a, 16b) und Mitnahmevorrichtungen (17a, 17b) und der Spindel (40, 40') in einer Anfangsaufbohrposition in der zweiten Aufbohrstrecke zu bewirken.

8. Verfahren zum Aufbohren von Durchgangsöffnungen in einer Platte (2) unter Verwendung einer Vorrichtung nach einem der Ansprüche 1 bis 7, dadurch gekennzeichnet, daß während eines Aufbohrvorgangs in einer der Aufbohrstrecken (14a) die Rückstellung der Zugfördervorrichtung (16b) der Mitnahmevorrichtung (17b) und der Spindel (40') der zweiten Aufbohrstrecke (14b) in einer Anfangsstellung bei verdeckter Zeit bzw. zu einem verdeckten Zeitpunkt durchgeführt wird, um den Aufbohrvorgang in der zweiten Aufbohrstrecke (14b) beginnen zu können.

9. Verfahren nach Anspruch 8, dadurch gekennzeichnet, daß der Aufbohrvorgang in der ersten Strecke (14a) durch den Hindurchtritt zumindest einer Spindel (40), die mit einem ihrer Enden mit einem beweglichen Kopf einer Zugfördervorrichtung (16a) und mit ihrem anderen Ende mit einem beweglichen Mitnahmekopf der Mitnahmevorrichtung (17a) verbunden ist, durch zumindest eine Öffnung der Platte (2) bewirkt wird, daß am Ende des Aufbohrvorgangs durch Hindurchtritt der Spindel (40) durch die Durchgangsöffnung in der Platte (2) die Spindel (40) von ihrer Verbindung mit dem Mitnahmekopf (37a) der Mitnahmevorrichtung (17a) freigegeben wird, und daß die eine von der anderen der beweglichen Einheiten der Zugfördervorrichtung (16a) und der Mitnahmevorrichtung (17a) entfernt wird, um ein vollständiges Ausrücken der Spindel (40) von der Platte (2) und eine Freigabe der Platte (2) zu erzielen.

10. Verfahren nach Anspruch 8 oder 9, dadurch gekennzeichnet, daß das Rückstellen der Mitnahmevorrichtung (17b) und der Spindel (40') von einer zweiten Aufbohrstrecke (14b) während des Aufbohrens in der ersten Aufbohrstrecke (14a) verwirklicht wird, indem nacheinander die Verschiebung der beweglichen Einheiten der Zugfördervorrichtung (16b) und der Mitnahmevorrichtung (17b) der zweiten Aufbohrstrecke (14b) in der axialen Richtung eine gegen die andere bewirkt wird, um den Eingriff des Endes der Spindel (40) in Gegenüberlage zu der Zugfördervorrichtung (16b) in einen Aufnahmeteil eines beweglichen Mitnahmekopfs der Mitnahmevorrichtung (17b), das Verriegeln bzw. Blockieren des Endes der Spindel (40') in dem Mitnahmekopf (37b), die Verschiebung der Spindel (40') und der Zugförder(25b)- und Mitnahme(37b)köpfe in einer Richtung entgegengesetzt zum Aufbohren und daraufhin das Trennen der Spindel (40') des Zugförderkopfs (16b) durch Verschiebung in der axialen Richtung des Mitnahmekopfs (37b), welcher die Spindel (40') antreibt bzw. mitnimmt, in einer Richtung entgegengesetzt zu dem Zugförderkopf (25b) zu bewirken.

11. Verfahren nach Anspruch 8, 9 oder 10, dadurch gekennzeichnet, daß beim Ablauf des Aufbohrvorgangs in der ersten Aufbohrstrecke (14a) und einem Rückstellvorgang in eine Anfangsposition für die Elemente der zweiten Aufbohrstrecke (14b) die aufzubohrende Platte (2) bis in eine Aufbohrposition in der zweiten Aufbohrstrecke (14b) verschoben wird, das Spannen der Zangen eines Eingriffschlittens (39b) auf die bzw. gegen die Spindel (40') der zweiten Aufbohrstrecke (14b) bewirkt wird, der Eingriffschlitten (39b) in Richtung der aufzubohrenden Platte (2) und unter Zwischenschaltung des Mitnahmekopfs (37b) der Mitnahmevorrichtung (17b) verschoben wird, die Spindel (40') in ein Vorbohrloch der aufzubohrenden Platte (2) in Eingriff gebracht wird und daraufhin in eine Aufnahmeöffnung des Zugförderkopfs (25b) der Zugfördervorrichtung (16b), und die Verriegelung bzw. Festsetzung eines Endes der Spindel (40') in der Aufnahmeöffnung des Zugförderkopfs (25b) und des anderen Endes der Spindel (40') in einer Aufnahmeöffnung des Mitnahmekopfs (37b) bewirkt wird.
